# FASCICULE DE BREVET EUROPEEN

(11) **EP 3 536 003 B1**
(45) Date de publication et mention de la délivrance du brevet: **24.01.2024**
(21) Numéro de dépôt: 17804609.0
(22) Date de dépôt: 26.10.2017
(51) Int. Cl.: H04W 12/06, H04L 9/40, H04L 41/28, H04L 12/46

(54) **PROCÉDÉ DE PROCÉDÉ DE CONTRÔLE D'ACCÈS À UN SERVICE UTILISATEUR DESTINÉ AU CONTRÔLE D'UNE INSTALLATION DOMOTIQUE**
VERFAHREN ZUR STEUERUNG DES ZUGRIFFS AUF EINEN BENUTZERDIENST ZUR STEUERUNG EINER HEIMAUTOMATISIERUNGSANLAGE
METHOD FOR CONTROLLING ACCESS TO A USER SERVICE INTENDED TO CONTROL A HOME-AUTOMATION INSTALLATION

(30) Priorité: 02.11.2016 FR 1660575
(43) Date de publication de la demande: 11.09.2019
(73) Titulaire: SOMFY ACTIVITES SA, 74300 Cluses (FR)
(72) Inventeur: POGNANT, Sylvain, 74600 Seynod (FR)
(74) Mandataire: Germain Maureau
(86) Numéro de dépôt international: PCT/FR2017/052948
(87) Numéro de publication internationale: WO 2018/083398

(56) Documents cités:
- EP-A1- 2 884 716
- FR-A1- 2 913 551
- FR-A1- 2 978 891

## Description

### Domaine de l'invention

La présente invention concerne un procédé de contrôle d'accès à un service utilisateur destiné au contrôle d'une installation domotique.

### Art antérieur

Une installation domotique d'un bâtiment peut comprendre une pluralité de dispositifs domotiques. Il est connu de procéder à la configuration, et au contrôle, c'est à dire à la commande et/ou à la supervision de ladite installation en utilisant une unité centrale de commande qui communique avec un ou plusieurs dispositifs domotiques.

Par nature, une telle installation domotique est un environnement hétérogène. Lors d'un incident sur l'installation, correspondant par exemple à la constatation d'un défaut par l'utilisateur final ou un dysfonctionnement, il peut se révéler difficile pour un opérateur ou utilisateur de maintenance, notamment de maintenance à distance, d'identifier la source du défaut ou du dysfonctionnement entre les différents éléments composant l'installation.

En particulier, Il peut être difficile pour un utilisateur de maintenance de reproduire les conditions ou la configuration dans laquelle un utilisateur a pu constater un dysfonctionnement.

La présente invention a pour but de résoudre tout ou partie des inconvénients mentionnés ci-dessus.

EP 2 884 716 A1 divulgue une méthode d'authentification par jeton pour l'accès à un service.

### Exposé de l'invention

A cet effet, la présente invention concerne un procédé de contrôle d'accès à un service utilisateur destiné au contrôle d'une installation domotique comprenant au moins un dispositif domotique et au moins une unité centrale de commande, le procédé étant mis en oeuvre par une unité de gestion ou par l'au moins une unité centrale de commande et comprenant les étapes suivantes :
- Une étape de réception d'une demande d'accès au service utilisateur émise par un utilisateur de maintenance en vue d'un accès au service en tant qu'un utilisateur final, sur la base d'un identifiant de l'utilisateur final et d'un jeton d'authentification ;
- Une étape de vérification de la validité du jeton d'authentification, auprès d'un référentiel de validité des jetons d'authentification, pour une authentification en tant qu'un utilisateur final en vue de l'accès au service utilisateur ;
- Une étape d'autorisation d'accès de l'utilisateur de maintenance en tant qu'utilisateur final au service utilisateur en cas de constatation de la validité du jeton d'identification ;

Grâce aux dispositions selon l'invention, l'accès au service utilisateur est autorisé sur la base : soit d'un identifiant d'utilisateur final et d'un mot de passe ou autre élément d'identification personnel de l'utilisateur final ; soit d'un identifiant d'utilisateur final et d'un jeton d'authentification à validité limitée.

Il est possible pour l'utilisateur de maintenance d'avoir accès au service utilisateur en utilisant les même paramètres que l'utilisateur final, et donc une configuration identique, ce qui permet de constater des difficultés rencontrées par l'utilisateur final sans biais du à une configuration différente des paramètres d'accès. Ces dispositions permettent d'éviter des développements complémentaires, et il n'est en particulier pas nécessaire de créer un compte administrateur ou une interface correspondante pour le service utilisateur. Par ailleurs, les modifications effectuées par l'utilisateur de maintenance en tant qu'utilisateur final seront directement appliquées au compte de l'utilisateur final. Ces dispositions permettent également la préservation de la confidentialité du mot de passe de l'utilisateur final.

Ainsi, la mise en place de la gestion d'incident est facilitée en permettant de procéder à des vérifications à distance par les utilisateurs de maintenance sur le service utilisateur en lien avec les unités centrales de commande et/ou les dispositifs domotiques appartenant à une ou plusieurs installation domotiques d'un utilisateur final.

Au sens de la présente invention, un service utilisateur correspond à service informatisé, notamment un service accessible à distance, qui permet l'accès à au moins une fonction de contrôle ou de supervision d'une installation domotique ou d'un dispositif domotique, au moyen d'une interface utilisateur. L'interface utilisateur peut être accessible par une interface graphique, ou par l'intermédiaire d'une interface de programmation.

Au sens de la présente invention, un jeton d'authentification correspond à identifiant d'authentification à usage unique ou limité attaché à un utilisateur déterminé. Le référentiel de validité des jetons d'authentification est un service ou un stockage de données de validité des jetons d'authentification.

Selon un aspect de l'invention, l'unité de gestion est un serveur connecté à distance à l'au moins une installation domotique, par l'intermédiaire d'un réseau étendu. Il est à noter que le terme serveur est une désignation logique qui peut recouvrir l'utilisation de plusieurs serveurs physiques pour répartir la charge de traitement informatique à réaliser.

Selon un autre aspect de l'invention, l'unité de gestion est une unité centrale destinée à être reliée à une ou plusieurs unités centrales de commande sur des réseaux privés ou locaux distincts, ou encore sur le même réseau local.

Au sens de l'invention, un utilisateur de maintenance ou utilisateur de support est un utilisateur en charge de répondre aux appels ou aux requêtes des utilisateurs finaux, ces requêtes pouvant être ponctuelles ou sous la forme d'un abonnement de surveillance de l'installation, notamment au sein d'un centre d'appel.

Au sens de la présente invention, un dispositif domotique est un équipement domotique et/ou un capteur, ou encore une partie d'équipement domotique ou une partie de capteur correspondant à un sous-ensemble fonctionnel. Un dispositif domotique peut également correspondre à un point de commande d'autres dispositifs domotiques.

Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Au sens de la présente invention, une installation est un ensemble comprenant une pluralité de dispositifs domotiques et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Au sens de la présente invention, une unité centrale de commande de l'installation domotique est une unité électronique comprenant :
- au moins une unité de traitement pour contenir et exécuter au moins un programme d'ordinateur,
- au moins un module de communication destinée au contrôle et/ou à la commande d'au moins un dispositif domotique ; et
- au moins un module de communication avec l'unité de gestion.

L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Il est également possible que l'unité centrale de commande soit intégrée à un routeur et/ou à un modem réalisant une connexion à un réseau étendu, notamment à Internet.

Selon une première possibilité, le service utilisateur peut être configuré pour interdire l'accès concomitant entre l'utilisateur de maintenance utilisant un jeton d'identification et l'utilisateur final.

Selon une deuxième possibilité, le service peut être configuré pour permettre un accès concomitant entre l'utilisateur de maintenance utilisant un jeton d'identification et l'utilisateur final.

Dans le cas où un accès concomitant est possible pour entre l'utilisateur de maintenance utilisant un jeton d'identification et l'utilisateur final, le service utilisateur peut être configuré pour offrir un mode normal et un mode empêchant toute modification si l'utilisateur de maintenance est connecté. Ainsi, certaines fonctions sont désactivées pour l'utilisateur final lorsque l'utilisateur de maintenance est connecté.

Selon un aspect de l'invention, le procédé comprend en outre une étape de mise à jour de la validité du jeton d'identification dans le référentiel de validité des jetons d'authentification.

Selon un aspect de l'invention, l'étape de mise à jour de la validité du jeton d'identification dans le référentiel de validité des jetons d'authentification fait partie de l'étape d'autorisation d'accès. Grâce à ces dispositions, il est possible de garantir que les deux opérations sont réalisées ensemble, et de ne pas autoriser des accès supplémentaires en cas de dysfonctionnement du système entre ces étapes.

Selon un aspect de l'invention, l'étape de mise à jour de la validité du jeton d'identification dans le référentiel de validité des jetons d'authentification est réalisée postérieurement ou concomitamment à l'étape d'autorisation d'accès.

Selon un aspect de l'invention, l'étape de mise à jour de la validité du jeton d'identification dans le référentiel de validité des jetons d'accès correspond à une invalidation de ce jeton. Le jeton peut être à usage unique ou présenter un nombre limité d'utilisations.

Selon un aspect de l'invention, le procédé comprend les étapes suivantes, préalables à l'étape de demande d'accès au service utilisateur :
- Une étape de réception d'une demande de génération d'un jeton d'authentification en vue de l'accès au service utilisateur par un utilisateur de maintenance en tant qu'un utilisateur final ;
- Une étape de vérification de l'autorisation de l'utilisateur de maintenance à accéder au service en tant que l'utilisateur final ;
- Une étape de génération d'un jeton d'authentification, associé à l'identifiant de l'utilisateur, si l'utilisateur de maintenance est autorisé à accéder au service en tant que l'utilisateur final.
- Une étape d'enregistrement de la validité du jeton d'identification dans le référentiel de validité des jetons d'accès.

Selon un aspect de l'invention, le procédé comprend :
- Une étape de communication du jeton à l'utilisateur de maintenance ou à un service de maintenance.

Selon un aspect de l'invention, le jeton d'authentification est associé à une période de validité au-delà de laquelle il n'est plus utilisable.

Selon un aspect de l'invention, la demande d'accès au service utilisateur émise par un utilisateur de maintenance est réalisée par l'intermédiaire d'un service de maintenance.

Selon un aspect de l'invention, le service de maintenance accède à une interface utilisateur du service utilisateur en fournissant le jeton d'authentification.

Selon un aspect de l'invention, le jeton d'authentification est pré rempli dans une page d'accès de l'interface utilisateur par le service de maintenance.

Selon un aspect de l'invention, l'étape de vérification de l'autorisation de l'utilisateur de maintenance à accéder au service en tant que l'utilisateur final comprend :
- une étape de vérification des droits d'accès de l'utilisateur de maintenance au service utilisateur auprès d'un référentiel de droit d'accès.

Selon un aspect de l'invention, le référentiel de droit d'accès peut être confondu ou distinct avec le référentiel de validité des jetons d'authentification.

Selon un aspect de l'invention, l'étape de vérification de l'autorisation de l'utilisateur de maintenance à accéder au service en tant que l'utilisateur final comprend :
- une étape de demande d'autorisation à l'utilisateur final.

Selon un aspect de l'invention, l'autorisation est demandée à l'utilisateur final par exemple à travers d'une interface graphique du service utilisateur.

Selon un aspect de l'invention, l'étape de vérification de l'autorisation de l'utilisateur de maintenance à accéder au service en tant que l'utilisateur final comprend :
- une étape d'authentification de l'utilisateur de maintenance sur la base d'un jeton de session.

Selon un aspect de l'invention, le jeton d'authentification est associé à une information identifiant l'utilisateur de maintenance.

Ces dispositions permettent une traçabilité des actions réalisées par l'utilisateur de maintenance en tant qu'utilisateur final. Cette information peut être intégrée au jeton ou stockée dans le référentiel de validité des jetons.

Les différents aspects définis ci-dessus non incompatibles peuvent être combinés.

La portée de l'invention est définie par les revendications indépendantes.

### Brève description des figures

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1, une deuxième installation domotique, ainsi qu'un serveur destiné à être connecté à un terminal utilisateur ;
La figure 3 est un schéma représentant un serveur ou un groupe de serveur regroupant des services de contrôle ou de commande d'une installation, ainsi que des services d'administration ou d'authentification.
La figure 4 est un schéma illustrant un mode de mise en oeuvre d'un procédé de contrôle d'accès à un service utilisateur destiné au contrôle d'une installation domotique selon l'invention.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Description d'un système comprenant une installation domotique

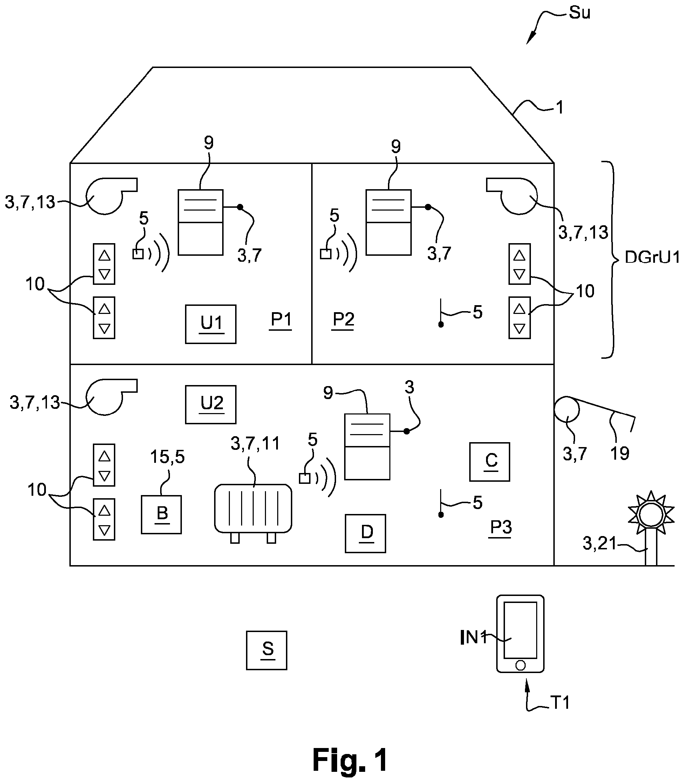

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique Su peut également comprendre un point de commande 15 d'un actionneur 7, comme un boîtier de commande B sans fil pour le volet roulant 9.

L'installation domotique Su peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique Su.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

Les dispositifs domotiques comprennent de façon générale une unité de traitement comprenant un processeur exécutant un logiciel embarqué. Ce logiciel fait l'objet de mises à jour pour en améliorer les fonctions ou procéder à des corrections.

L'installation domotique Su comprend une unité centrale de commande ou une pluralité d'unités centrales de commande U1, U2. En particulier et à titre d'exemple, deux unités centrales de commande U1, U2 sont représentées sur la figure 1. Selon une variante, une installation domotique peut comprendre également une unité centrale de commande unique.

Chaque unité centrale de commande U1, U2 est agencée pour commander et/ou contrôler une partie des dispositifs D de l'installation Su formant un groupe DGrU1, DGrU2. A titre d'exemple, sur la figure 1, l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

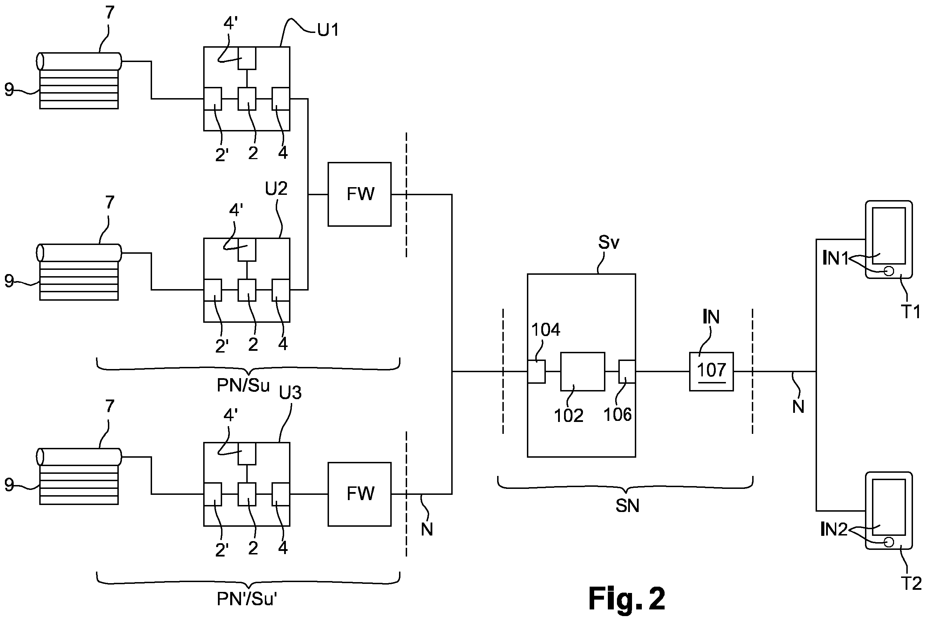

Comme cela est représenté sur la figure 2, chaque unité centrale de commande U est agencée pour communiquer avec un serveur Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un deuxième réseau privé PN', indépendant du réseau privé PN correspondant à une deuxième installation domotique Su'. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité de traitement exécute un logiciel embarqué. Ce logiciel fait l'objet de mises à jour pour en améliorer les fonctions ou procéder à des corrections.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon le premier protocole de communication local P1.

A titre d'exemple, le module de communication 2' peut être agencé pour mettre en oeuvre par exemple un ou plusieurs des premiers protocoles locaux P1 par exemple de type Z-Wave, EnOcean, IO Homecontrol, Somfy RTS, KNX, MODBUS, Wavenis, Philips HUE. Ces premiers protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

Dans le cas ou l'unité centrale de commande est intégrée à un dispositif domotique, le module de communication 2' destiné au contrôle et/ou à la commande du dispositif peut être un module de communication interne au dispositif domotique et/ou un module de communication destiné au contrôle et/ou à la commande d'autres dispositifs domotiques.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U peut comprendre, en outre, un module de communication 4' pour communiquer selon un deuxième protocole de communication cible P2, avec un terminal de communication mobile T. Le deuxième protocole de communication cible peut par exemple être un protocole de communication au dessus du protocole IP sur un réseau local, ou encore un protocole générique point à point. A titre d'exemple, le protocole applicatif WEAVE utilisant des protocoles de transport 6lowpan et thread pour un réseau maillé peuvent constituer un deuxième protocole cible. D'autres exemple incluent Bluetooth, Zigbee ou Wifi.

Le terminal de communication T peut contenir et exécuter un logiciel d'application APP.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Dans certaines applications, une unité centrale de commande U peut communiquer avec le serveur Sv à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur final Usr1 de contrôler à distance l'installation domotique, notamment par l'intermédiaire d'un service utilisateur Svc1.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T1 communiquant par le réseau étendu N. Le terminal de communication mobile T1 peut être, par exemple, un téléphone intelligent ou une tablette. Le terminal de communication mobile T1 peut être le même ou un terminal du même type que celui avec lequel l'unité centrale de commande U communique en local au moyen du module de communication 4', ou un terminal différent. Nous désignerons indifféremment ces terminaux mobiles par la référence T1. Alternativement, l'utilisateur final pourrait également faire usage d'un terminal fixe.

L'interface de commande et/ou de contrôle IN1 comprend un processeur qui peut être disposé au niveau du serveur web 107 et/ou du terminal de communication mobile T1.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

### Identifiant unique d'un dispositif domotique

Le serveur Sv et les unités centrales de commandes U peuvent utiliser un identifiant unique pour identifier les dispositifs domotiques. La structure d'un identifiant unique d'un dispositif domotique DURL va être à présent décrite de façon correspondante à un mode de réalisation particulier.

Selon ce mode de réalisation, l'identifiant unique d'un dispositif domotique comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif appartient à un groupe de dispositifs D associés à une même adresse. Les dispositifs qui sont une expression unique d'une adresse ne présentent pas d'extension d'identification d'un sous-système.

Ainsi, la forme de l'identifiant unique d'un dispositif DURL peut être la suivante :
<protocol>://<gatewayld>/<rawDeviceAddress>(#<subsystemld>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples

### 1) knx://0201-0001-1234/1.1.3

Cet identifiant unique DURL correspond à un dispositif D communiquant par le protocole KNX avec une adresse individuelle 1.1.3 accessible par l'unité centrale de commande U portant l'identifiant #0201-0001-1234.

### 2) io://0201-0001-1234/145036#2

Cet identifiant unique GDURL correspond à un sous-système portant le n°2 associé à un dispositif D communiquant par le protocole io homecontrol avec une adresse radio 145036 accessible par l'unité centrale de commande U portant l'identifiant #0201-0001-1234.

### Utilisateurs de maintenance et Utilisateurs finaux

Comme cela est représenté sur la figure 2, le serveur ou groupe de serveur Sv peut communiquer au moins un terminal en possession d'au moins un utilisateur final Usr1 de l'installation Su.

Le serveur ou groupe de serveurs Sv peut interagir avec au moins un utilisateur Usr2 possédant un profil utilisateur d'un second type correspondant à un opérateur ou utilisateur de maintenance à distance, notamment d'un utilisateur de maintenance en charge de répondre aux appels ou aux requête des utilisateurs finaux Usr1, en offrant un service de maintenance Svc2 pour le contrôle à distance ou l'administration de l'au moins une installation Su.

A cet effet, une interface IN2 est mise à disposition par le serveur Sv. L'accès à cette interface peut être réalisé par une application exécutée sur un terminal utilisateur T2 du second utilisateur Usr2, ou par un accès par un client léger.

### Service utilisateur, service de maintenances, services d'authentification

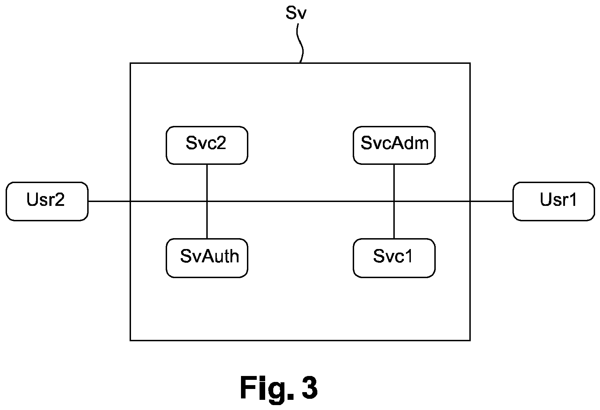

Le Serveur Sv ou un groupe de Serveur Sv héberge un ou plusieurs serveurs logiciels destinés à fournir des services, comme cela est illustré sur la figure 3.

En particulier, un premier service Svc1 correspond à un service utilisateur destiné au contrôle de l'installation domotique Su par un utilisateur Usr1 final. Le service utilisateur Svc1 est un service informatisé accessible à distance, qui permet l'accès à au moins une fonction de contrôle ou de supervision d'une installation domotique ou d'un dispositif domotique, au moyen d'une interface utilisateur. L'interface utilisateur peut être accessible par une interface graphique, ou par l'intermédiaire d'une interface de programmation.

Un second service correspond à un service d'authentification SvAuth. Ce service ou serveur d'authentification gère un premier référentiel d'un premier ensemble d'utilisateurs finaux et leur droits d'accès au service Svc1. Nous utiliserons indifférent la référence SvAuth pour le service et le référentiel correspondant.

Un troisième service Svc2 correspond à un service ou une interface d'administration ou de maintenance à distance d'une ou d'un ensemble d'installation domotiques ou de dispositifs domotiques appartenant à une ou plusieurs installation domotiques Su.

Un quatrième service SvAdmin gère un second référentiel d'un second ensemble d'utilisateurs de maintenance et leur accès au service SvUsr2. Nous utiliserons indifférent la référence SvAdmin pour le service et le référentiel correspondant.

Il est possible que le deuxième service et le quatrième service soient confondus et correspondent à un même service ou serveur d'authentification. De la même façon, le second et le premier service peuvent être confondus.

Dans le cadre de la présente invention, le rôle du serveur ou service d'authentification SvAuth est le suivant :
- ce service SvAuth sert à valider si un couple identifiant d'utilisateur final (par exemple : login) et mot de passe est valide. Alternativement, le mot de passe peut être remplacé par un autre élément d'identification personnel de l'utilisateur final, par exemple une empreinte biométrique ;
- Ce service SvAuth sert à créer un jeton d'authentification à usage unique ou destiné à un nombre d'usage limité et/ou pour une durée limitée et pour un utilisateur déterminé ;
- Le service SvAuth sait valider si un couple identifiant d'utilisateur final et jeton d'authentification est valide.

Le procédé concerne un premier utilisateur Usr1 qui est un utilisateur final de l'installation domotique.

Le procédé concerne également un second utilisateur Usr2 d'un second type correspondant à un utilisateur de maintenance qui souhaite se faire passer pour le premier utilisateur Usr1.

Les conditions pour que le second utilisateur Usr2 du second type puisse se faire passer pour l'utilisateur du premier type Usr1 sont les suivantes :
- L'utilisateur Usr2 est authentifié en tant qu'utilisateur du second type ou utilisateur de maintenance ;
- L'utilisateur Usr2 peut se faire passer pour l'utilisateur Usr1 en raison de son rôle ou de l'autorisation donnée par Usr1.

Le service utilisateur Svc1 peut être configuré pour interdire l'accès concomitant entre l'utilisateur de maintenance Usr2 utilisant un jeton d'identification et l'utilisateur final Usr1, afin que les deux utilisateurs ne puissent pas en même temps émettre des commandes dans l'installation.

Alternativement, le service utilisateur Svc1 peut être configuré pour permettre un accès concomitant entre l'utilisateur de maintenance utilisant un jeton d'identification et l'utilisateur final. Dans ce cas, le service utilisateur Svc1 peut être configuré pour offrir un mode normal correspondant à la connexion d'un utilisateur final seul et un mode empêchant toutes les modifications si l'utilisateur de maintenance est connecté. Ainsi, certaines fonctions sont désactivées pour l'utilisateur final lorsque l'utilisateur de maintenance est connecté en même temps que l'utilisateur final.

Selon une variante, le service utilisateur Svc1 peut être hébergé sur une unité centrale de commande. Dans ce cas, le service utilisateur peut accéder à distance au service d'authentification SvAuth qui peut être hébergé sur le serveur.

### Procédé de prise de contrôle d'un compte utilisateur

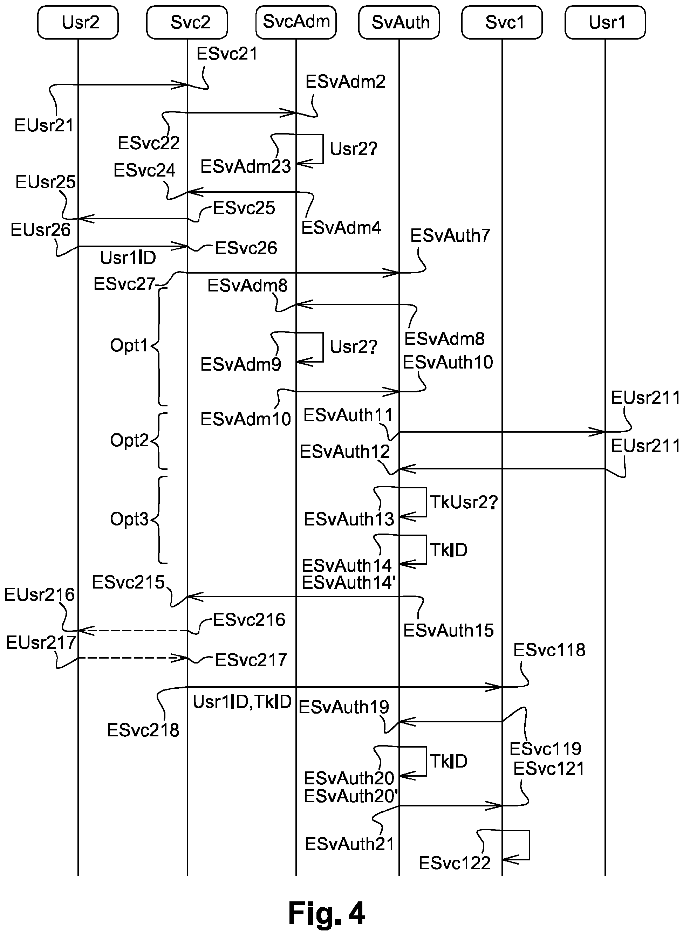

Nous allons à présent décrire un mode de mise en oeuvre d'un procédé de contrôle d'accès à un service utilisateur Svc1 en référence à la figure 4.

Dans une étape EUsr21, le deuxième utilisateur ou utilisateur de maintenance Usr2 émet une demande d'authentification auprès du service Svc2 qui reçoit cette demande dans une étape ESvc1.

Le service ESvc22 émet une requête d'authentification auprès du service SvAdmin qui reçoit cette requête dans une étape ESvAdmin2.

Le service SvAdmin vérifie que l'utilisateur Usr2 possède un profil existant présentant des droits d'accès au service Svc2 dans une étape ESvAdmin23 auprès du référentiel. Nous supposons ici qu'un profil utilisateur a été précédemment créé pour Usr2.

Le service SvAmin renvoie une réponse correspondant au résultat de la vérification dans une étape ESvAdm4, le message de réponse comprenant éventuellement un jeton d'accès TkUsr2 au service Svc2, le message de réponse étant reçu par le service Svc2 dans une étape ESvc24.

L'autorisation d'accès au service Sv2 est confirmée et transmise à l'utilisateur dans une étape ESvc25, le second utilisateur en prenant connaissance dans une étape EUsr25.

Dans une étape EUsr26, le deuxième utilisateur Usr2 émet une demande d'accès en tant qu'un premier utilisateur du premier type Usr1 auprès du service Svc1.

Cette demande est reçue par le service Svc2 dans une étape ESvc26.

Le Service Svc2 émet dans une étape ESvc27 la demande à destination du service SvAuth qui la reçoit dans une étape ESvAuth7.

Par la suite, le service SvAuth s'assure de l'identité de l'utilisateur Usr2 et des droits de cet utilisateur. Cette vérification peut être traitée de plusieurs façons distinctes, qui peuvent être combinées.

Selon une première option Opt1, le service SvAuth envoie dans une étape ESvAuth8 une demande au service SvAdmin, qui la reçoit dans une étape ESvAdm8.

Le service SvAdmin vérifie que l'utilisateur Usr2 possède un profil existant possédant des droits d'accès au service Svc1 dans une étape ESvAdmin9.

Le service SvAmin renvoie une réponse correspondant au résultat de la vérification dans une étape ESvAdm10, le message de réponse étant reçu par le service SvAuth dans une étape ESvAuth10.

Selon une seconde option Opt2, le service SvAuth envoie dans une étape ESvAuth11 une demande d'autorisation à l'utilisateur Usr1, par exemple à travers d'une interface graphique du service SvC1, l'utilisateur recevant cette demande dans une étape EUsr211.

L'utilisateur envoie une réponse à cette demande dans une étape EUsr212, par exemple par l'intermédiaire de l'interface graphique du service Svc1, le message de réponse étant reçu par le service SvAuth dans une étape ESvAuth12.

Selon une troisième option Opt3 le service SvAuth procède dans une étape ESvAuth13 à une authentification de l'utilisateur Usr2 sur la base d'un jeton d'authentification TkUsr2 communiqué par exemple lors de la demande d'authentification reçue dans l'étape ESAuth7.

Lorsque l'utilisateur Usr2 est authentifié comme un utilisateur ayant les droits d'accès suffisants pour se connecter en tant que l'utilisateur Usr1, le service SvAuth peut alors, dans une étape EsvAuth14, générer un jeton d'authentification TklD, associé à l'identifiant de l'utilisateur Usr1.Ce jeton TklD est associé à une période de validité au-delà de laquelle il n'est plus utilisable.

Lors de cette étape, le service d'authentification SvAuth peut mémoriser une association entre le jeton d'authentification TklD et le deuxième utilisateur Usr2 dans son référentiel.

Ce jeton peut être communiqué à l'utilisateur Usr2 dans une étape EsvAuth15, par l'intermédiaire du service Svc2 dans une étape ESvc215 / ESvc216, l'utilisateur recevant ce jeton dans une étape EUsr216.

Dans une étape EUsr217, l'utilisateur Usr2 peut tenter de se connecter au service Svc1 en s'authentifiant en tant qu'utilisateur Usr1, en utilisant l'identifiant de l'utilisateur Usr1, et le jeton TklD obtenu précédemment.

Cette tentative peut se réaliser par l'intermédiaire du service Svc2, ce qui est représenté par les étapes ESvc17 et ESvc18, le service Scv1 recevant la requête de connexion dans une étape EScv118. Le service Svc2 peut directement ouvrir l'interface utilisateur du service Svc1 en fournissant le jeton TklD, de façon préremplie.

Le service Svc1 vérifie si les éléments fournis, à savoir l'identifiant de l'utilisateur Usr1 et le jeton TklD permettent une authentification.

A cet effet, le service Svc1 envoie dans une étape 8 une demande d'authentification l'identifiant de l'utilisateur Usr1 et le jeton TklD au service SvAuth, qui la reçoit dans une étape ESvAuth19.

Le service SvAuth vérifie que le jeton TklD est un jeton valide pour une authentification en tant qu'utilisateur Usr1 en vue de l'accès au service Svc1 dans une étape ESvAuth20. Lors de cette étape, une invalidation du jeton pour une requête ultérieure est effectuée. Il est également possible d'envisager une décrémentation du nombre d'utilisations possible si plusieurs utilisations sont autorisées.

Le service SvAmin renvoie une réponse correspondant au résultat de la vérification dans une étape ESvAuth21, le message de réponse étant reçu par le service Svc1 dans une étape ESvc121.

Si la réponse est positive, l'accès est accordé par le service Svc1 dans une étape Escv122.

L'utilisateur Usr2 est donc connecté en tant qu'utilisateur Usr1 et vu par le service Svc1 comme l'utilisateur Usr1.

Il est à noter que le jeton TklD peut être associé à une information identifiant l'utilisateur Usr2, pour permettre une traçabilité des actions réalisées par l'utilisateur Usr2 en tant qu'utilisateur Usr1.En effet, dans le cas contraire, il n'y a pas de moyen de savoir si les actions ont été réalisées par l'utilisateur Usr1 ou par l'utilisateur Usr2 en tant qu'utilisateur Usr1.

Selon une variante, l'invalidation du jeton TklD pourrait être réalisée après que l'accès au service Svc1 ait été effectif et confirmé par le service Svc1.

## Revendications

1. Procédé de contrôle d'accès à un service utilisateur (Svc1) destiné au contrôle d'une installation domotique (Su) comprenant au moins un dispositif domotique (D) et au moins une unité centrale de commande (U), le procédé étant mis en oeuvre par une unité de gestion (Sv) ou par l'au moins une unité centrale de commande (U) et comprenant les étapes suivantes :
- Une étape (ESvAuth7) de réception d'une demande de génération d'un jeton d'authentification (TkID) en vue d'un accès au service utilisateur (Svc1) par un utilisateur de maintenance (Usr2) en tant qu'un utilisateur final (Usr1) ;
- Une étape (ESvAuth8, ESvAuth10, ESvAuth11, ESvAuth12, ESvAuth13) de vérification de l'autorisation de l'utilisateur de maintenance (Usr2) à accéder au service (Svc1) en tant que l'utilisateur final (Usr1) ;
- Une étape (EsvAuth14) de génération d'un jeton d'authentification (TkID), associé à un identifiant de l'utilisateur final (Usr1ID), si l'utilisateur de maintenance (Usr2) est autorisé à accéder au service (Svc1) en tant que l'utilisateur final (Usr1) ;
- Une étape d'enregistrement (Escv114') de la validité du jeton d'identification (TkID) dans un référentiel de validité des jetons d'accès (SvAuth) ;
- Une étape de réception (Escv118) d'une demande d'accès au service utilisateur (Svc1) émise par l'utilisateur de maintenance (Usr2) en vue d'un accès au service en tant que l'utilisateur final (Usr1), sur la base de l'identifiant de l'utilisateur final (Usr1ID) et du jeton d'authentification (TkID) ;
- Une étape (ESvc119) de vérification de la validité du jeton d'authentification (TkID), auprès du référentiel de validité des jetons d'authentification (SvAuth), pour une authentification en tant qu'utilisateur final (Usr1) en vue de l'accès au service utilisateur (Svc1) ;
- Une étape (ESvc122) d'autorisation d'accès de l'utilisateur de maintenance (Usr2) en tant qu'utilisateur final (Usr1) au service utilisateur (Svc1) en cas de constatation de la validité du jeton d'identification (TkID).

2. Procédé selon la revendication 1, comprenant en outre une étape de mise à jour (Escv119) de la validité du jeton d'identification (TkID) dans le référentiel de validité des jetons d'authentification (SvAuth).

3. Procédé selon la revendication 1 ou la revendication 2, comprenant :
- Une étape (EsvAuth15) de communication du jeton (TkID) à l'utilisateur de maintenance (Usr2) ou à un service de maintenance (Svc2).

4. Procédé selon l'une quelconque des revendications 1 à 3, dans lequel le jeton d'authentification (TkID) est associé à une période de validité au-delà de laquelle il n'est plus utilisable.

5. Procédé selon l'une des revendications 1 à 4, dans lequel la demande d'accès au service utilisateur (Svc1) émise par un utilisateur de maintenance (Usr2) est réalisée par l'intermédiaire d'un service de maintenance (Svc2).

6. Procédé selon la revendication 5, dans lequel le service de maintenance (Svc2) accède à une interface utilisateur du service utilisateur (Svc1) en fournissant le jeton d'authentification (TkID).

7. Procédé selon l'une des revendications 2 à 6, dans lequel l'étape de vérification de l'autorisation de l'utilisateur de maintenance (Usr2) à accéder au service (Svc1) en tant que l'utilisateur final (Usr1) comprend :
- une étape (ESvAuth8, ESvAuth10) de vérification des droits d'accès de l'utilisateur de maintenance (Usr) au service utilisateur (Svc1) auprès d'un référentiel de droit d'accès (SvAdmin).

8. Procédé selon l'une des revendications 2 à 7, dans lequel l'étape de vérification de l'autorisation de l'utilisateur de maintenance (Usr2) à accéder au service (Svc1) en tant que l'utilisateur final (Usr1) comprend :
- une étape (ESvAuth11, ESvAuth12) de demande d'autorisation à l'utilisateur final (Usr1).

9. Procédé selon l'une des revendications 2 à 8, dans lequel l'étape de vérification de l'autorisation de l'utilisateur de maintenance (Usr2) à accéder au service (Svc1) en tant que l'utilisateur final (Usr1) comprend :
- une étape (ESvAuth13) d'authentification de l'utilisateur de maintenance (Usr2) sur la base d'un jeton de session (TkUsr2).

10. Procédé selon l'une des revendications 1 à 9, dans lequel le jeton d'authentification (TkID) est associé à une information identifiant l'utilisateur de maintenance (Usr2)

## Patentansprüche

1. Verfahren zur Steuerung des Zugriffs auf einen Benutzerdienst (Svc1), der zur Steuerung einer Heimautomatisierungsanlage (Su) bestimmt ist, die mindestens eine Heimautomatisierungsvorrichtung (D) und mindestens eine zentrale Bedieneinheit (U) umfasst, wobei das Verfahren von einer Verwaltungseinheit (Sv) oder von der mindestens einen zentralen Bedieneinheit (U) umgesetzt wird und die folgenden Schritte umfasst:
- einen Schritt (ESvAuth7) des Empfangens einer Anforderung zum Erzeugen eines Authentifizierungstokens (TkID) im Hinblick auf einen Zugriff auf den Benutzerdienst (Svc1) durch einen Wartungsbenutzer (Usr2) als Endbenutzer (Usr1);
- einen Schritt (ESvAuth8, ESvAuth10, ESvAuth11, ESvAuth12, ESvAuth13) des Überprüfens der Autorisierung des Wartungsbenutzers (Usr2), als Endbenutzer (Usr1) auf den Dienst (Svc1) zuzugreifen;
- einen Schritt (EsvAuth14) des Erzeugens eines Authentifizierungstokens (TkID), das mit einer Kennung des Endbenutzers (Usr1 ID) verknüpft ist, wenn der Wartungsbenutzer (Usr2) autorisiert ist, als Endbenutzer (Usr1) auf den Dienst (Svc1) zuzugreifen;
- einen Schritt des Registrierens (Escv114') der Gültigkeit des Identifikationstokens (TkID) in einem Gültigkeitsrepository der Zugriffstokens (SvAuth);
- einen Schritt des Empfangens (Escv118) einer Anforderung zum Zugriff auf den Benutzerdienst (Svc1), die vom Wartungsbenutzer (Usr2) im Hinblick auf einen Zugriff auf den Dienst als Endbenutzer (Usr1) auf Grundlage der Kennung des Endbenutzers (Usr1 ID) und des Authentifizierungstokens (TkID) gestellt wird;
- einen Schritt (ESvc119) des Überprüfens der Gültigkeit des Authentifizierungstokens (TkID) beim Gültigkeitsrepository der Authentifizierungstoken (SvAuth) für eine Authentifizierung als Endbenutzer (Usr1) im Hinblick auf den Zugriff auf den Benutzerdienst (Svc1);
- einen Schritt (ESvc122) des Autorisierens von Zugriff des Wartungsbenutzers (Usr2) als Endbenutzer (Usr1) auf den Benutzerdienst (Svc1) im Falle einer Feststellung der Gültigkeit des Identifikationstokens (TkID).

2. Verfahren nach Anspruch 1, das weiter einen Schritt des Aktualisierens (Escv119) der Gültigkeit des Identifikationstokens (TkID) im Gültigkeitsrepository der Authentifizierungstoken (SvAuth) umfasst.

3. Verfahren nach Anspruch 1 oder Anspruch 2, umfassend:
- einen Schritt (EsvAuth15) des Kommunizierens des Tokens(TklD) an den Wartungsbenutzer(Usr2) oder an einen Wartungsdienst (Svc2).

4. Verfahren nach einem der Ansprüche 1 bis 3, wobei das Authentifizierungstoken (TkID) mit einer Gültigkeitsdauer verknüpft ist, jenseits der es nicht mehr verwendet werden kann.

5. Verfahren nach einem der Ansprüche 1 bis 4, wobei die Anforderung zum Zugriff auf den Benutzerdienst (Svc1), die von einem Wartungsbenutzer (Usr2) gestellt wird, mittels eines Wartungsdienstes (Svc2) erfolgt.

6. Verfahren nach Anspruch 5, wobei der Wartungsdienst (Svc2) unter Bereitstellung des Authentifizierungstokens (TkID) auf eine Benutzerschnittstelle des Benutzerdienstes (Svc1) zugreift.

7. Verfahren nach einem der Ansprüche 2 bis 6, wobei der Schritt des Überprüfens der Autorisierung des Wartungsbenutzers (Usr2), als Endbenutzer (Usr1) auf den Dienst (Svc1) zuzugreifen, umfasst:
- einen Schritt (ESvAuth8, ESvAuth10) des Überprüfens der Zugriffsrechte des Wartungsbenutzers (Usr) auf den Benutzerdienst (Svc1) bei einem Zugriffsrechte-Repository (SvAdmin).

8. Verfahren nach einem der Ansprüche 2 bis 7, wobei der Schritt des Überprüfens der Autorisierung des Wartungsbenutzers (Usr2), als Endbenutzer (Usr1) auf den Dienst (Svc1) zuzugreifen, umfasst:
- einen Schritt (ESvAuth11, ESvAuth12) des Anforderns einer Autorisierung vom Endbenutzer (Usr1).

9. Verfahren nach einem der Ansprüche 2 bis 8, wobei der Schritt des Überprüfens der Autorisierung des Wartungsbenutzers (Usr2), als Endbenutzer (Usr1) auf den Dienst (Svc1) zuzugreifen, umfasst:
- einen Schritt (ESvAuth13) des Authentifizierens des Wartungsbenutzers (Usr2) auf Grundlage eines Sitzungstokens (TkUsr2).

10. Verfahren nach einem der Ansprüche 1 bis 9, wobei das Authentifizierungstoken (TkID) mit einer Information verknüpft ist, die den Wartungsbenutzer (Usr2) identifiziert.

## Claims

1. A method for monitoring access to a user service (Svc1) intended for monitoring a home automation installation (Su) comprising at least one home automation device (D) and at least one central control unit (U), the method being implemented by a management unit (Sv) or by the at least one central control unit (U) and comprising the following steps:
- A step (ESvAuth7) of receiving a generation request of an authentication token (TkID) for access to the user service (Svc1) by a maintenance user (Usr2) as an end user (Usr1);
- A step (ESvAuth8, ESvAuth10, ESvAuth11, ESvAuth12, ESvAuth13) of verifying the authorization of the maintenance user (Usr2) to access the service (Svc1) as the end user (Usr1);
- A step (EsvAuth14) of generating an authentication token (TkID), associated with an identifier of the end user (Usr1ID), if the maintenance user (Usr2) is authorized to access the service (Svc1) as the end user (Usr1);
- A recording step (Escv114') of the validity of the identification token (TkID) in an access token validity repository (SvAuth);
- A step of receiving (Escv118) a request for access to the user service (Svc1) issued by the maintenance user (Usr2) for access to the service as the end user (Usr1), based on end user identifier (Usr1ID) and the authentication token (TkID);
- A step (ESvc119) of verifying the validity of the authentication token (TkID), with the authentication token validity repository (SvAuth), for an authentication as an end user (Usr1) for access to the user service (Svc1);
- A step (ESvc122) of authorizing access to the maintenance user (Usr2) as an end user (Usr1) to the user service (Svc1) if the validity of the identification token (TkID) is noted.

2. The method according to claim 1, further comprising a step of updating (Escv119) the validity of the identification token (TkID) in the authentication token validity repository (SvAuth).

3. The method according to claim 1 or claim 2, comprising:
- A step (EsvAuth15) of communicating the token (TkID) to the maintenance user (Usr2) or to a maintenance service (Svc2).

4. The method according to any one of claims 1 to 3, wherein the authentication token (TkID) is associated with a validity period beyond which it is no longer usable.

5. The method according to any of claims 1 to 4, wherein the request for access to the user service (Svc1) issued by a maintenance user (Usr2) is carried out via a maintenance service (Svc2).

6. The method according to claim 5, wherein the maintenance service (Svc2) accesses a user interface of the user service (Svc1) by providing the authentication token (TkID).

7. The method according to any of claims 2 to 6, wherein the step of verifying the authorization of the maintenance user (Usr2) to access the service (Svc1) as the end user (Usr1) comprises:
- A step (ESvAuth8, ESvAuth10) of verifying the access rights of the maintenance user (Usr) to the user service (Svc1) with an access right repository (SvAdmin).

8. The method according to any of claims 2 to 7, wherein the step of verifying the authorization of the maintenance user (Usr2) to access the service (Svc1) as the end user (Usr1) comprises:
- a step (ESvAuth11, ESvAuth12) of authorization request to the end user (Usr1).

9. The method according to any of claims 2 to 8, wherein the step of verifying the authorization of the maintenance user (Usr2) to access the service (Svc1) as the end user (Usr1) comprises:
- A step (ESvAuth13) of authentication of the maintenance user (Usr2) based on a session token (TkUsr2).

10. The method according to any of claims 1 to 9, wherein the authentication token (TkID) is associated with an information identifying the maintenance user (Usr2).
